# EUROPEAN PATENT APPLICATION

(11) **EP 4 299 315 A1**
(43) Date of publication of application: **03.01.2024**
(21) Application number: 22181901.4
(22) Date of filing: 29.06.2022
(51) Int. Cl.: B33Y 40/00, H01J 7/18, B22F 3/15, B22F 3/10

(54) **REDUCTION OF OXYGEN CONTENT IN A PROCESS CHAMBER**

(71) Applicant: Fraunhofer-Gesellschaft zur Förderung der angewandten Forschung e.V., 80686 München (DE)
(72) Inventor: PFAFF, Aron, 79104 Freiburg (DE)
(74) Representative: Maiwald GmbH

(57) **Abstract**

The present invention relates to a process chamber comprising a structure (3) comprising a solid material suitable for binding oxygen in form of an oxide compound; a method for reducing the oxygen content in said process chamber, an apparatus comprising said process chamber and the use of said process chamber for manufacturing methods, such as additive manufacturing methods, thermal processes or hot isotactic pressing, in an atmosphere having an oxygen content of not more than 1000 ppm.

## Description

The present invention relates to a process chamber comprising a structure (3) comprising a solid material suitable for binding oxygen in form of an oxide compound; a method for reducing the oxygen content in said process chamber, an apparatus comprising said process chamber and the use of said process chamber for manufacturing methods, such as additive manufacturing methods, thermal processes or hot isotactic pressing, in an atmosphere having an oxygen content of not more than 10000 ppm.

### Technical background

Several manufacturing processes require atmospheres with a low oxygen content such as not more than 4000 ppm to 14000 ppm or even as low as 0 ppm (depending on the material). Examples for such manufacturing processes are e.g. additive manufacturing processes, especially laser powder bed fusion (L-PBF) processes or electron beam powder bed fusion (E-PBF) processes, thermal processes such as processes using high vacuum furnaces or gas boxes, the production of carbides and highly pure gases and other processes such as chemical vapour deposition (CVD).

The reduction of oxygen content is usually needed for quality or safety reasons, e.g. prevention of micro-cracks during processing of pure tungsten, prevention of the formation of oxides while heating materials such as titanium e.g. in order to reduce residual stresses or prevention of the formation of unwanted oxides. A low oxygen content ensures the safe processing of high-quality material.

During the production cycles the produced or treated materials is removed from the process chamber and the process chamber is prepared for the next production cycle. Thereby, ambient air is introduced into the process chamber, which has an oxygen content of 21%. Before start of the next production cycle the oxygen content therefore needs to be reduced.

Conventionally, in these processes the oxygen content is either reduced by purging the accordant process chamber with an inert gas such as nitrogen or argon, or by applying a high vacuum in the accordant process chamber.

Purging with inert gas can be used when an oxygen content reduction to about 500 ppm to 4000 ppm is aimed at. Thereby, inert gas is introduced into the process chamber and replaces the oxygen containing atmosphere. In order to avoid an introduction of ambient air into the process chamber, the process chamber usually is subjected to overpressure. During purging with inert gas the reduction of the oxygen content follows an exponential curve. This means that in the first minutes a reduction of the oxygen content from 21% to one-figure percentages is obtained. However, at lower oxygen contents of about 2% the further reduction of the oxygen content takes a much longer time so that overall purging times of 30 min to 2 h are to be expected to obtain oxygen contents of 4000 ppm to 500 ppm. Theoretically lower oxygen contents can be obtained, however at the price of even higher purging times. Nevertheless, purging with inert gas is widely used due to low apparatus costs.

For obtaining a higher oxygen content reduction of lower than 500 ppm, like as low as about 10 ppm, a high vacuum is applied. In high vacuum the reduction of the oxygen content also follows an exponential curve but in a shorter timeframe. Thus, a low oxygen content in the process chamber can be obtained in a reasonable time but at the price of high apparatus costs.

Thus, there is a need in the art for providing a process chamber, in which the oxygen content can be easily reduced to low oxygen contents of not more than 10000 ppm or even 0 ppm at a reasonable time and at reasonable costs.

### Summary of the invention

The present invention relates to a process chamber comprising
- a process chamber body (1);
- an inlet for inert gas (2) situated at one wall of the process chamber body (1); and
- a structure (3) comprising a solid material suitable for binding oxygen in form of an oxide compound, situated within the process chamber body (1).

Further, the present invention relates to a method for reducing the oxygen content in a process chamber comprising the steps of:
(i) Providing a process chamber as described above or below;
(ii) Purging the process chamber body (1) with inert gas through the inlet for inert gas (2) for reducing the oxygen content in the process chamber body (1);
(iii) Passing the inert gas through the structure (3) for oxidizing the solid material with the residual oxygen in the process chamber body (1) and binding the reacted oxygen in form of an oxide compound within the structure (3).

Still further, the present invention relates to an apparatus comprising the process chamber as described above or below, preferably being selected from an apparatus for additive manufacturing methods, thermal processes or hot isotactic pressing.

Additionally, the present invention relates to the use of the process chamber as described above or below for manufacturing methods, such as additive manufacturing methods, thermal processes or hot isotactic pressing, in an atmosphere having an oxygen content of not more than 10000 ppm, preferably not more than 500 ppm, more preferably not more than 100 ppm, most preferably not more than 10 ppm.

### Figure

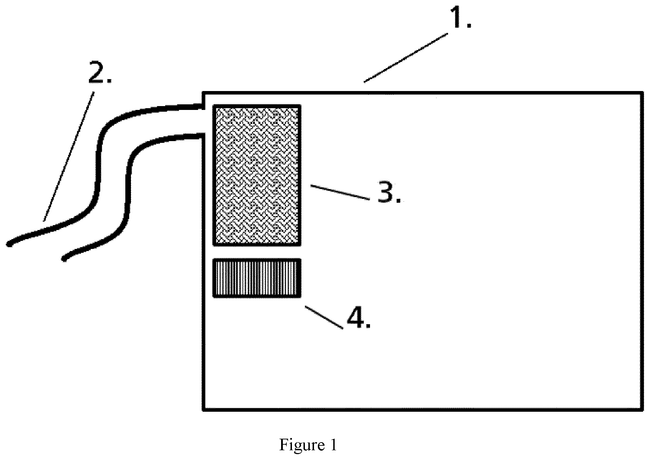

Figure 1 shows a schematic drawing of the process chamber in accordance with the present invention.
1 process chamber body
2 inlet for inert gas
3 structure comprising a solid material suitable for binding oxygen in form of an oxide compound
4 heating source for heating the solid material of the structure

### Detailed description

### Process chamber

In a first aspect the present invention relates to a process chamber comprising
- a process chamber body (1);
- an inlet for inert gas (2) situated in one wall of the process chamber body (1); and
- a structure (3) comprising a solid material suitable for binding oxygen in form of an oxide compound, situated within the process chamber body (1).

A schematic drawing of the process chamber in accordance with the present invention is illustrated in Figure 1.

The process chamber body (1) can be any suitable process chamber body for a manufacturing process in which an atmosphere having an reduced oxygen content, such as an oxygen content of not more than 10000 ppm, preferably not more than 500 ppm, more preferably not more than 100 ppm, most preferably not more than 10 ppm, is needed. Such manufacturing processes as e.g. additive manufacturing methods, thermal processes or hot isotactic pressing.

At one of its walls the process chamber body (1) has an inlet for inert gas (2). Said inlet is usually connected via a transport line such as a pipe with a source of inert gas. The transport line is further connected with means for regulating the flow of the inert gas from the source of inert gas into the process chamber body (1) through the inlet for inert gas (2), such as a valve. Suitable inert gases are e.g. nitrogen or noble gases. Nitrogen and argon are especially preferred due to cost reasons.

The process chamber preferably also includes a gas outlet situated in one wall of the process chamber body (1). Said gas outlet is preferably situated at another wall of the process chamber body (1) than the wall in which the inlet for inert gas (2) is situated, such as the opposite wall of the process chamber body (1).

The process chamber preferably further includes means for applying an overpressure in the process chamber body (1). Suitable means are e.g. a pressure valve situated at the gas outlet for opening the gas outlet at a certain overpressure. By means of the means for applying an overpressure in the process chamber body (1) an overpressure can be applied in the process chamber body (1) which ensures that ambient air (including 21 % oxygen) cannot enter the process chamber body (1).

Further, the process chamber preferably comprises means for an active ventilation of the process chamber body (1) such as a fan or a ventilator. By means of the means for an active ventilation it is ensured that inter gas is distributed in the process chamber body (1) and the oxygen containing atmosphere is driven out of the process chamber body (1).

The inventive process chamber further includes a structure (3) comprising a solid material suitable for binding oxygen in form of an oxide compound, situated within the process chamber body (1).

The solid material of the structure (3) is preferably selected from metals or metal alloys. Suitable metals or metal alloys are preferably based on base metals like aluminium, titanium, magnesium, zinc, lithium, iron, potassium, lead, copper, nickel, low-alloy steel or other mixtures thereof.

The remaining oxygen reacts with the solid material of the structure (3) through oxidation and forms an oxide compound, such as a metal oxide or metal alloy oxide. Said oxide compounds usually are solid and remain within the structure.

By means of said oxidation reaction the remaining oxygen in the atmosphere of the process chamber body (1) can be effectively reduced.

For ensuring an efficient oxidation reaction metals and metal alloys are preferred with a high tendency of forming oxides, a high thermal conductivity and a low heat capacity.

The solid material is preferably situated in the structure (3) in form of a powder, in form of a porous structure, in form of a lattice structure or in form of a perforated structure.

These forms ensure a large surface area for an efficient oxidation reaction.

It is preferred that the ratio of surface to volume of the solid material in the structure (3) is as high as possible. Suitable ranges are e.g. in the range of from 1.000 m⁻¹ to 600.000 m⁻¹, preferably from 10.000 m⁻¹ to 600.000 m⁻¹.

The structure can include a frame for supporting the solid material.

The structure (3) is preferably situated within the process chamber body (1) in spatial proximity to the inlet for inert gas (2).

The structure (3) is preferably removably situated within the process chamber body (1).

As such the structure (3) can be removed from the process chamber body (1) when the solid material is exhausted and has fully reacted with the oxygen to oxide compounds. The structure (3) then can be replace with a structure (3) with new solid material.

The process chamber preferably also comprises a heating source (4) for heating the solid material of the structure (3) in spatial proximity to the structure (3) within the process chamber body (1). In some embodiments the heating source is within the structure (3).

By means of said heating source (4) the solid material of the structure (3) can be heated for increasing the oxidation rate of the solid material and thus also increases the reduction rate of the oxygen from the atmosphere in the process chamber body (1).

The heating source can be any suitable source for heating the solid material in the structure (3).

The heating source (4) is situated within the process chamber body (1) in spatial proximity to or within the structure as to efficiently heat the solid material.

However, the heating source is preferably situated independently form the structure (3) in the process chamber body (1) so that the heating source can remain in the process chamber body (1), when the structure (3) is removed and exchanged.

In one specific embodiment the heating source (4) is in form of a cylinder, which is surrounded by the structure (3).

The process chamber preferably further comprises means for regulating the introduction of gas into the structure (3).

Said means for regulating the introduction of gas into the structure (3) can be an opening in the structure (3), which can be opened and shut. By means of said means for regulating the introduction of gas into the structure (3) it can be ensured that the atmosphere in the process chamber body (1) is introduced into the structure after the oxygen content in the atmosphere of the process chamber body (1) has been reduced to a certain limit, such as e.g. to 2% (usually from 21% oxygen content) by means of exchange of the oxygen containing atmosphere of the process chamber body (1) by inert gas. Thereby, it is ensured that oxidation reaction is only applied for reducing the last percentages of oxygen from the atmosphere which take a too long time to reduce only by purging with inert gas. When using the solid material only for oxidizing the last percentages of oxygen in the atmosphere of the process chamber body (1) the solid material is only slowly exhausted so that the structure (3) needs to be exchanged only infrequently. This adds to the cost reduction measures.

Further, means for regulating the introduction of gas into the structure (3) can also include means for actively or passively leading the gas stream into the structure such as e.g. baffle plates or suction devices.

### Method

In a further aspect the present invention relates to a method for reducing the oxygen content in a process chamber comprising the steps of:
(i) Providing a process chamber as described above or below;
(ii) Purging the process chamber body (1) with inert gas through the inlet for inert gas (2) for reducing the oxygen content in the process chamber body (1);
(iii) Passing the inert gas through the structure (3) for oxidizing the solid material with the residual oxygen in the process chamber body (1) and binding the reacted oxygen in form of an oxide compound within the structure (3).

The method can be applied in the process chamber as described above or below an all aspects.

In a first oxygen reduction step the process chamber body (1) is purged with inert gas. The inert gas is preferably provided from an inert gas source and transferred into the process chamber body (1) though the inlet for inert gas (2).

The flow of the inert gas can be regulated suitable means such as a valve.

The excess gas including the oxygen containing as is preferably driven out of the process chamber body (1) through of a gas outlet.

It is preferred that the process chamber body (1) is subjected to overpressure.

This can be done for example through a pressure valve situated at the gas outlet which opens the gas outlet only at a certain level of overpressure.

By applying overpressure in the process chamber body (1) it is ensured that ambient air (including 21 % oxygen) cannot enter the process chamber body (1).

The inert gas can be actively distributed within the process chamber body (1) by means for an active ventilation such as a fan or a ventilator.

During said first oxygen reduction step the oxygen is preferably only reduced by purging the process chamber body (1) with inert gas. This means that during said first oxygen reducing step the gas in the process chamber body (1) is preferably not passed through the structure.

The first oxygen reduction step is preferably conducted until the oxygen content of the atmosphere in the process chamber body (1) is reduced to a certain limit, such as e.g. about 2%.

The reason is that a reduction of the oxygen content by purging with inert gas follows an exponential curve and a reduction from 21% (ambient air) to about 2% can be obtain by purging rather easily in a reasonable time frame. Therefore, especially in view of cost considerations, it is preferred to use the second step of oxidizing the solid material with the residual oxygen only for reducing the last percentages of residual oxygen in a time and cost efficient way.

The process chamber body (1) is preferably purged with inert gas for a time of from 5 min to 5 hours, more preferably from 10 min to 3 hours, still more preferably from 30 min to 2 hours, before passing the inert gas through the structure (3).

In a second oxygen reduction step the inert gas is passed through the structure (3). During said step the solid material in the structure (3) is oxidized in an oxidization reaction by the residual oxygen in the process chamber body (1) passing through the structure (3), whereby the reacted oxygen is bound in form of an oxide compound within the structure (3).

The inert gas is preferably lead through the structure (3) either passively or actively. The inert gas can be lead passively though the structure (3) by e.g. situating the structure (3) in spatial proximity to the inlet for inert gas (2) and/or by means of means for actively or passively leading the gas stream into the structure such as e.g. baffle plates or suction devices.

The structure is preferably heated for increasing the oxidization reaction.

During the second oxygen reduction step the first oxygen reaction step of purging the process chamber body (1) with inert gas is preferably further conducted. Thereby, the oxygen content in the atmosphere is reduced mainly by means of the oxidation reaction but also to some extent by purging with inert gas. The inert gas further contributes to transporting the residual oxygen to the solid material in the structure.

For further increasing the efficiency of the oxidation reaction the structure (3) can be removed from the process chamber body (1), when the solid material in the structure (3) is exhausted and replaced with a new structure (3) comprising fresh solid material.

By means of the inventive method the oxygen content in the atmosphere of the process chamber body (1) can be reduced to not more than 10000 ppm, preferably not more than 500 ppm, more preferably not more than 100 ppm, most preferably not more than 10 ppm. For certain applications even an oxygen content of 0 ppm can be obtained.

The overall time for reducing the oxygen content in a process chamber according to the method of the invention is usually in the range of from 15 min to 6 hours, preferably from 30 min to 5 hours, more preferably from 1 hour to 3 hours.

Compared to a conventional method in which the process chamber is only purged with inert gas a time reduction of 15 to 90 min can be achieved.

Further, compared to a conventional method in which the process chamber is only purged with inert gas a lower oxygen content can be achieved.

### Apparatus

In another aspect the present invention relates to an apparatus comprising the process chamber as described above or below.

The apparatus is preferably selected from an apparatus for additive manufacturing methods, thermal processes or hot isotactic pressing.

Additive manufacturing methods, in which the apparatus is preferably applied, are for example especially laser powder bed fusion (L-PBF) processes or electron beam powder bed fusion (E-PBF) processes.

Thermal processes, in which the apparatus is preferably applied, are e.g. processes using high vacuum furnaces or gas boxes, the production of carbides and highly pure gases and other processes such as chemical vapour deposition (CVD).

The apparatus preferably comprises the process chamber according to the present invention in all aspects as described above or below.

Further in the apparatus the method according to the present invention is preferably applied in all aspects as described above or below.

### Use

In yet another aspect the present invention relates to the use of the process chamber as described above or below for manufacturing methods, such as additive manufacturing methods, thermal processes or hot isotactic pressing, in an atmosphere having an oxygen content of not more than 10000 ppm, preferably not more than 500 ppm, more preferably not more than 100 ppm, most preferably not more than 10 ppm.

Even oxygen contents of 0 ppm can be reached.

Additive manufacturing methods are for example especially laser powder bed fusion (L-PBF) processes or electron beam powder bed fusion (E-PBF) processes.

Thermal processes are e.g. processes using high vacuum furnaces or gas boxes, the production of carbides and highly pure gases and other processes such as chemical vapour deposition (CVD).

The process chamber according to the present invention is preferably used in all aspects as described above or below.

Further the method according to the present invention is preferably applied in all aspects as described above or below.

### Benefits of the invention

In the process chamber of the present invention and by means of the method according to the invention each as described above or below extremely low oxygen contents of up to 0 ppm can be achieved without high technical effort or time-consuming approaches.

The inventive solution provides an improved process security and process quality. In the process chamber of the present invention and by means of the method according to the invention each as described above or below exceeding of the limits oxygen content and thus production faults in certain critical applications (e.g. micro-fissures during processing of pure tungsten, prevention of residual stress during heating of materials such as titanium or prevention of the formation of unwanted oxidic compounds) can be prevented.

The inventive solution allows an accelerated oxygen reduction compared to mere purging methods and reduces the process time of each production cycle by 15 to 90 min.

Overall the process chamber and the method of the present invention as described above or below allow a cost- and time-sensitive solution.

## Claims

1. A process chamber comprising
• a process chamber body (1);
• an inlet for inert gas (2) situated at one wall of the process chamber body (1); and
• a structure (3) comprising a solid material suitable for binding oxygen in form of an oxide compound, situated within the process chamber body (1).

2. The process chamber according to claim 1, wherein the structure (3) is situated within the process chamber body (1) in spatial proximity to the inlet for inert gas (2).

3. The process chamber according to claim 1, wherein the structure (3) is removably situated within the process chamber body (1).

4. The process chamber according to any one of the preceding claims, wherein the solid material of the structure (3) is selected from metals or alloys, preferably from base metals like aluminium, titanium, magnesium, zinc, lithium, iron, potassium, lead, copper, nickel, low-alloy steel or other mixtures thereof.

5. The process chamber according to any one of the preceding claims, wherein the solid material is situated in the structure (3) in form of a powder, in form of a porous structure, in form of a lattice structure or in form of a perforated structure.

6. The process chamber according to any one of the preceding claims, wherein the ratio of surface to volume of the solid material in the structure (3) is in the range of from 1.000 m⁻¹ to 600.000 m⁻¹, preferably from 10.000 m⁻¹ to 600.000 m⁻¹.

7. The process chamber according to any one of the preceding claims further comprising a heating source (4) for heating the solid material of the structure (3) in spatial proximity to the structure (3) within the process chamber body(1).

8. The process chamber according to any one of the preceding claims further comprising means for an active ventilation of the process chamber body (1).

9. The process chamber according to any one of the preceding claims further comprising means for applying an overpressure in the process chamber body (1).

10. A method for reducing the oxygen content in a process chamber comprising the steps of:
(i) Providing a process chamber according to any one of the preceding claims;
(ii) Purging the process chamber body (1) with inert gas through the inlet for inert gas (2) for reducing the oxygen content in the process chamber body (1);
(iii) Passing the inert gas through the structure (3) for oxidizing the solid material with the residual oxygen in the process chamber body (1) and binding the reacted oxygen in form of an oxide compound within the structure (3).

11. The method according to claim 10, wherein the structure (3) is heated.

12. The method according to claims 10 or 11, wherein the process chamber body (1) is purged with inert gas for a time of from 5 min to 5 hours, preferably from 10 min to 3 hours, more preferably from 30 min to 2 hours, before passing the inert gas through the structure (3).

13. The method according to any one of claims 10 to 12, wherein the process chamber body (1) is subjected to overpressure.

14. An apparatus comprising the process chamber according to any one of the preceding claims, preferably being selected from an apparatus for additive manufacturing methods, thermal processes or hot isotactic pressing.

15. The use of a process chamber according to any one of claims 1 to 13 for manufacturing methods, such as additive manufacturing methods, thermal processes or hot isotactic pressing, in an atmosphere having an oxygen content of not more than 1000 ppm, preferably not more than 500 ppm, more preferably not more than 100 ppm, most preferably not more than 10 ppm.
